Europäisches Patentamt

European Patent Office

Office européen des brevets

(19)

(11) Numéro de publication: **0 069 657**
**B1**

(12) # FASCICULE DE BREVET EUROPEEN

(45) Date de publication du fascicule du brevet:
**03.10.84**

(51) Int. Cl.³: **F 16 D 65/56**

(21) Numéro de dépôt: **82401232.2**

(22) Date de dépôt: **01.07.82**

(54) **Frein à tambour.**

(30) Priorité: **10.07.81 FR 8113592**

(43) Date de publication de la demande:
**12.01.83 Bulletin 83/2**

(45) Mention de la délivrance du brevet:
**03.10.84 Bulletin 84/40**

(84) Etats contractants désignés:
**DE GB**

(56) Documents cités:
**FR - A - 2 457 415**
**GB - A - 1 507 550**

(73) Titulaire: **SOCIETE ANONYME D.B.A., Centre Paris Pleyel, F-93521 St-Denis Cédex 01 (FR)**

(72) Inventeur: **Courbot, Pierre, 5 bis rue d'Hérivaux, F-95400 Villiers le Bel (FR)**

(74) Mandataire: **Le Moenner, Gabriel et al, SERVICE BREVETS BENDIX 44, Rue François 1er, F-75008 Paris (FR)**

ACTORUM AG

## Description

L'invention se rapporte à un frein à tambour susceptible notamment d'équiper un véhicule automobile.

L'invention concerne en particulier un frein à tambour équipé d'un dispositif de réglage automatique destiné à compenser automatiquement l'usure des garnitures de friction associées aux segments de frein, afin de maintenir la course au niveau de la pédale de frein, nécessaire à la mise en œuvre de ce dernier, à un niveau sensiblement constant et faible.

On connaît de nombreux freins à tambour équipés de dispositifs de réglage automatique, mais la plupart de ces dispositifs présentent un certain nombre d'inconvénients. En particulier, ces dispositifs assurent le plus souvent le réglage sans distinguer entre l'augmentation de l'écartement des segments due à l'usure des garnitures et celle qui est due à la dilatation du tambour résultant d'un échauffement du frein. Afin d'éviter des risques de surréglage qui en découlent, on est généralement amené à prévoir un jeu fonctionnel important, auquel correspond une grande course morte au niveau de la pédale de commande des freins. Parmi les freins à tambour connus, il existe cependant un frein qui permet d'éliminer à peu près totalement cet inconvénient. Ce frein est décrit dans le brevet américain N° US 2570398, dans lequel le dispositif de réglage automatique est constitué par un système à rochet agissant sur un système vis-écrou de manière à allonger une entretoise au fur et à mesure de l'usure des éléments de friction. La démultiplication obtenue par ce dispositif permet le réglage par approches successives et donc évite un surréglage dû à un échauffement temporaire.

Dans un frein de ce type, la mise en œuvre du cylindre de roue a pour double conséquence d'appliquer les garnitures de friction associées aux segments contre le tambour de frein et de faire pivoter le cliquet de réglage d'une valeur correspondant au jeu existant entre les segments et le tambour. Si le jeu est suffisant pour justifier un réglage, le cliquet engage la dent suivante de la roue à rochet, et au retour, au relâchement du frein, le cliquet fera tourner l'écrou du système vis-écrou de la valeur correspondant à la dent passée. Ce dispositif permet d'obtenir un réglage limité à des valeurs faibles par suite de la démultiplication obtenue par le système vis-écrou, de sorte qu'il évite les surréglages inhérents à la majorité des autres dispositifs de réglage connus. Ainsi le frein qui vient d'être décrit ne peut suivre pratiquement que les phénomènes très lents qui sont des phénomènes liés à l'usure.

Cependant, ce dispositif présente l'inconvénient d'imposer un grand nombre d'applications de freinage pour rapprocher les segments du tambour lorsque le frein est neuf; en effet, pour pouvoir monter le tambour, il est nécessaire qu'un jeu important existe entre les segments et le tambour au moment du montage de celui-ci. Il en découle que, après intervention sur le tambour, la course de la pédale de commande des freins sera importante pendant un grand nombre de coups de frein, jusqu'à ce que le dispositif de rattrapage automatique d'usure approche suffisamment les segments du tambour pour avoir un jeu normal entre les segments et le tambour.

L'invention propose un frein à tambour présentant les avantages du frein qui vient d'être décrit, notamment en ce qui concerne l'élimination des risques de surréglage du frein, et permettant d'avoir un réglage accéléré lorsque les segments se situent à une distance élevée du tambour de frein.

Dans ce but, l'invention propose un frein à tambour à réglage automatique comprenant deux segments garnis d'éléments de friction susceptibles d'être sollicités en engagement de friction contre un tambour tournant par des moyens de serrage disposés entre deux premières extrémités des segments, un bloc d'ancrage fixe disposé entre les deux autres extrémités des segments, une entretoise montée au voisinage des moyens de serrage et en appui par chacune de ses extrémités sur chacun desdits deux segments, ladite entretoise comportant un dispositif d'allongement automatique en fonction de l'usure des éléments de friction formé par un système vis-écrou commandé par un cliquet monté sur un bras articulé sollicitant une roue à rochet, le débattement dudit bras et donc dudit cliquet étant d'amplitude d'autant plus grande que la distance entre le tambour et lesdits segments est élevée, caractérisé en ce que ledit bras articulé comporte une portion auxiliaire sollicitant également la roue à rochet lorsque le débattement du bras articulé atteint une valeur prédéterminée pour accélérer le rapprochement des segments du tambour.

Il est clair que, grâce à ces caractéristiques, le dispositif de rattrapage automatique permet d'une part un réglage très démultiplié lorsque le jeu normal existe entre les segments et le tambour, et d'autre part un réglage accéléré lorsque le jeu existant entre le segment et le tambour est élevé.

On décrira maintenant à titre d'exemple non limitatif deux modes de réalisation de l'invention en se référant aux dessins annexés dans lesquels:

la fig. 1 est une vue en plan d'un frein à tambour réalisé conformément aux enseignements de la présente invention;

la fig. 2 est une vue en coupe selon la ligne 2-2 de la fig. 1;

la fig. 3 est une coupe partielle agrandie suivant la ligne 3-3 de la fig. 1;

la fig. 4 est une vue en coupe partielle agrandie selon la ligne 3-3 de la fig. 1 d'un deuxième mode de réalisation de l'invention.

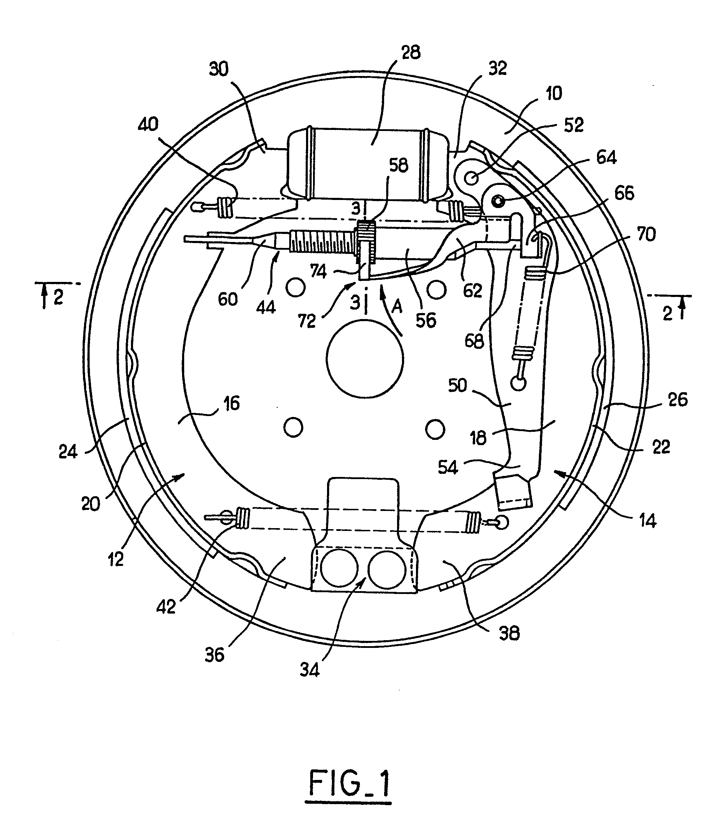

Le frein à tambour représenté sur la fig. 1 comprend une plaque-support 10 prévue pour être asociée à une partie fixe du véhicule (non représentée) et sur laquelle sont reçus de façon coulissante deux segments de frein 12 et 14. Chacun des segments 12 et 14 comprend une âme sensiblement plate 16, 18 et une jante arquée 20, 22 sur laquelle est montée une garniture de friction 24, 26, respectivement au moyen de rivets ou analogue. Des moyens de serrage, constitués dans le mode de réalisation représenté par un cylindre de roue 28, sont disposés entre les deux premières extrémités adjacentes 30 et 32 des segments 12 et 14 respectivement, et un bloc d'ancrage 34, associé à la plaque-support 10, est disposé entre les deux autres extrémités 36 et 38 des segments 12 et 14. En outre, des ressorts de rappel 40 et 42 sont disposés respectivement au voisinage du cylindre de roue 28 et du bloc d'ancrage 34, afin de solliciter respectivement les extrémités 30 et 32 des segments contre le cylindre de roue 28, et les extrémités 36 et 38 des segments contre le bloc d'ancrage 34.

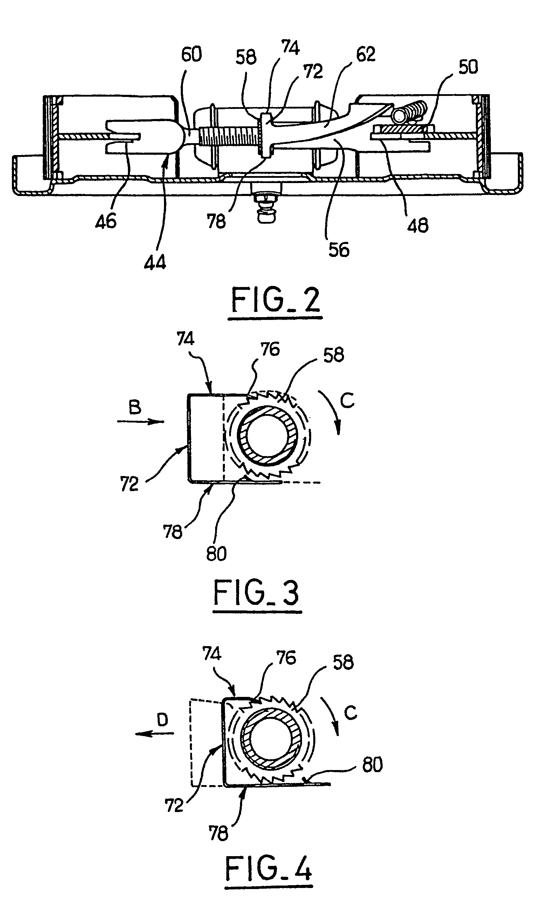

Comme le montre plus précisément la fig. 2, une entretoise 44 est disposée entre les segments 12 et 14 au voisinage du cylindre de roue 28, de façon à définir la distance séparant au repos les extrémités 30 et 32 des segments. Chacune des extrémités de l'entretoise 44 comporte une encoche en forme de U 46, 48 dans laquelle sont reçues respectivement les âmes 16 et 18 des segments 12 et 14. Dans le mode de réalisation représenté, l'encoche 48 reçoit en outre un levier de frein à main 50 monté pivotant sur l'extrémité 32 du segment 14 au moyen d'un rivet formant pivot 52, et dont l'extrémité libre 54 est repliée pour recevoir une extrémité d'un câble de commande de frein à main (non représenté) dont l'autre extrémité est prévue pour être reliée à un levier de commande disposé dans le compartiment du conducteur du véhicule. L'entretoise 44 est formée d'un premier élément 56 de forme tubulaire venant en appui sur une roue à rochet 58 montée vissée sur un second élément 60 de l'entretoise 44; cet élément 60 est monté coulissant dans l'alésage de la partie tubulaire du premier élément 56. La roue à rochet 58 et le second élément 60 forment un dispositif d'allongement à système vis-écrou. Un bras 62 est monté articulé sur le levier de frein à main 50 au moyen d'un axe formant pivot 64. Le bras 62 comporte une saillie 66 maintenue en appui sur l'extrémité 68 du premier élément 56 au moyen d'un ressort 70 dont une extrémité prend appui sur la saillie 66 et dont l'autre extrémité est accrochée au levier de frein à main 50. Le bras 62 porte une portion en U 72 qui prend en chape la roue à rochet 58. Une première branche 74 de la portion en U forme un cliquet 76 qui coopère avec la denture de la roue à rochet 58, comme le montre particulièrement la fig. 3. L'autre branche 78 de la portion en U 72 porte une saillie 80 qui se trouve dégagée de la roue à rochet 58 lorsque le bras 62 est dans sa position de repos, comme représenté sur la fig. 3.

Le frein à tambour qui vient d'être décrit en se référant aux fig. 1 à 3 fonctionne de la façon suivante:

Au repos, et lorsque les garnitures de friction 24 et 26 sont neuves, les différents éléments constituant le frein occupent les positions représentées sur les fig. 1, 2 et 3. Lors de la mise en œuvre du cylindre de roue 28, les extrémités 30 et 32 des segments 12 et 14 sont sollicitées en éloignement l'une de l'autre de telle sorte que les garnitures de friction 24 et 26 sont amenées en engagement avec le tambour de frein (non représenté) de façon à créer un couple de freinage. Simultanément, l'entretoise 44 se déplace vers la gauche en considérant la fig. 1 avec l'extrémité 30 du segment 12 sous l'action du ressort 70 qui repousse l'extrémité 68 du premier élément 56 au moyen de la saillie 66 du bras 62 articulé sur le pivot 64. Lors du pivotement du bras 62 selon la flèche A, la portion en U 72 se déplace selon la flèche B de la fig. 3, ce qui provoque la rotation de la roue à rochet dans la direction de la flèche C au moyen du cliquet 76 coopérant avec la denture de la roue à rochet 58. Lors du relâchement du frein, la portion 72 se déplace dans le sens inverse à la flèche B et, si l'amplitude du mouvement a été suffisante, elle saute une dent de manière à pouvoir assurer un réglage lors de l'application suivante.

Lorsque la distance entre les segments de frein et le tambour est importante, l'amplitude de débattement du bras 62 par rapport à la roue à rochet 58 est importante. La portion en U 72 se déplace alors jusqu'à la position représentée en pointillés sur la fig. 3; le cliquet 76, après avoir fait tourner la roue à rochet 58, devient inopérant, alors que la saillie 80 s'engage dans la denture de la roue à rochet et fait pivoter la roue 58 dans le sens de la flèche C lorsque le freinage est relâché, et cela sous l'action du ressort de rappel 40 qui repousse l'entretoise 44, plus précisément lorsque le ressort de rappel 40 repousse la saillie 66 du bras 62 au travers de l'extrémité 68 de ladite entretoise 44.

Lorsque le jeu entre segments et tambour devient normal, l'amplitude de débattement du bras 62 devient plus faible, et la saillie 80 ne peut plus coopérer avec la denture de la roue à rochet 58; seul le cliquet 76 intervient, la vitesse d'allongement de l'entretoise 44 devient donc plus faible et correspond au rattrapage normal de l'usure des éléments de friction.

Sur la fig. 4, on a représenté un deuxième mode de réalisation dans lequel les pièces ayant la même fonction portent les mêmes références. Dans ce mode de réalisation représenté dans sa position de repos, le cliquet 76 met en rotation la roue à rochet 58 lors du relâchement du frein. En effet, lors de l'application du freinage, le bras 62 et la portion en U 72 se déplacent dans le sens de la flèche D, le cliquet 76, lorsque l'amplitude est suffisante, saute une dent et, au relâchement de la pression de freinage, le cliquet 76 fait tourner la roue à rochet dans le sens de la flèche C. Lorsque l'amplitude du mouvement du bras 62 atteint une valeur prédéterminée, comme représentée en pointillés sur la fig. 4, alors la saillie 80 fait tourner la roue à rochet 58 dans le sens de la flèche C lors de l'application de freinage, et au retour le cliquet 76 fait tourner également dans le sens de la flèche C la même roue à rochet 58. Pour mettre en œuvre ce deuxième mode de réalisation, il est clair que le bras 62 doit être modifié de façon que la portion en U soit située entre l'entretoise 44 et le cylindre de roue 28, ou bien, en conservant la position du bras telle que représenté sur la fig. 1, le pivot 64 doit se situer en dessous du point de contact entre le segment 14 et l'entretoise 44, de façon à inverser les mouvements du bras 62.

A la lumière de la description qui précède il apparaît que l'invention permet d'avoir deux vitesses d'allongement de l'entretoise, une vitesse lente où seul le cliquet 76 travaille, et une vitesse rapide où la saillie 80 et le cliquet 76 travaillent alternativement. L'invention permet donc une vitesse d'approche rapide des segments, puis un réglage lent pour compenser uniquement l'usure des éléments de friction.

## Revendications

1. Frein à tambour à réglage automatique comprenant deux segments (12, 14) garnis d'éléments de friction (24, 26) susceptibles d'être sollicités en engagement de friction contre un tambour tournant par des moyens de serrage (28) disposés entre deux premières extrémités (30, 32) des segments (12, 14), un bloc d'ancrage (34) fixe disposé entre les deux autres extrémités (34, 38) des segments (12, 14), une entretoise (44) montée au voisinage des moyens de serrage (28) et en appui par chacune de ses extrémités sur chacun desdits deux segments, ladite entretoise (44) comportant un dispositif d'allongement automatique en fonction de l'usure des éléments de friction, dispositif formé par un système vis-écrou (58, 60) commandé par un cliquet (76) monté sur un bras articulé (62) sollicitant une roue à rochet (58), le débattement dudit bras (62) et donc dudit cliquet (76) étant d'amplitude d'autant plus grande que la distance entre le tambour et lesdits segments est élevée, caractérisé en ce que ledit bras articulé (62) comporte une portion auxiliaire (78) sollicitant également la roue à rochet (58) lorsque le débattement du bras articulé (62) atteint une valeur prédéterminée pour accélérer le rapprochement des segments du tambour.

2. Frein à tambour suivant la revendication 1, caractérisé en ce que le bras articulé (62) comporte une portion en U (72), le cliquet étant formé sur une branche (74) du U, la portion auxiliaire (78) étant formée sur l'autre branche de la portion en U.

3. Frein à tambour suivant la revendication 2, caractérisé en ce que la portion en U (72) prend en chape ladite roue à rochet (58) et en ce que ladite portion auxiliaire (78) sollicite ladite roue à rochet (58) au travers d'une saillie (80) formée sur ladite portion auxiliaire (78).

4. Frein à tambour suivant la revendication 3, caractérisé en ce que ledit cliquet (76) sollicite ladite roue à rochet (58) lorsque les moyens de serrage (28) sont appliqués, et en ce que ladite saillie (80) sollicite ladite roue à rochet (58) dans une même direction (C) lorsque les moyens de serrage (28) sont relâchés si ladite valeur prédéterminée a été atteinte lors de l'application des moyens de serrage (28).

5. Frein à tambour suivant la revendication 3, caractérisé en ce que ladite saillie (80) sollicite ladite roue à rochet (58) après ledit débattement prédéterminé lorsque les moyens de serrage (28) sont appliqués, et en ce que ledit cliquet (76) sollicite ladite roue à rochet (58) dans une même direction (C) lorsque les moyens de serrage (28) sont relâchés.

## Patentansprüche

1. Selbsttätig nachstellbare Trommelbremse mit zwei Backen (12, 14), die mit Reibgliedern (24, 26) versehen sind, wobei die Reibglieder in Reibanlage mit einer umlaufenden Bremstrommel drückbar sind durch Spannmittel (28), die zwischen zwei ersten Enden (30, 32) der Backen (12, 14) angeordnet sind, einem ortsfesten Verankerungsblock (34), der zwischen den beiden anderen Enden (34, 38) der Backen (12, 14) angeordnet ist, einer Druckstrebe (44), die benachbart zu den Spannmitteln (28) angeordnet ist und mit jedem ihrer Enden an jedem der Backen angreift, wobei die Druckstrebe (44) eine Vorrichtung aufweist, die in Abhängigkeit von einer Abnutzung der Reibglieder selbsttätig verlängerbar ist und von einer Schraubenmutteranordnung (58, 60) gebildet wird, die von einer Sperrklinke (76) gesteuert wird, die an einem Gelenkarm (62) angebracht ist, der ein Klinkenrad (58) vorspannt, wobei der Ausschlag des Gelenkarms (62) und somit die Sperrklinke (76) eine um so grössere Amplitude besitzt, je grösser der Abstand zwischen der Bremstrommel und den Backen ist, dadurch gekennzeichnet, dass der Gelenkarm (62) einen Hilfsabschnitt (78) aufweist, der ebenfalls das Klinkenrad (58) vorspannt, wenn der Ausschlag des Gelenkarms (62) einen vorgegebenen Wert erreicht, um die Annäherung der Backen der Bremstrommel zu beschleunigen.

2. Trommelbremse nach Anspruch 1, dadurch gekennzeichnet, dass der Gelenkarm (62) einen U-förmigen Abschnitt (72) aufweist, wobei die Sperrklinke am einen Schenkel (74) des U und der Hilfsabschnitt (78) am anderen Schenkel des U gebildet ist.

3. Trommelbremse nach Anspruch 2, dadurch gekennzeichnet, dass der U-förmige Abschnitt (72) das Klinkenrad (58) übergreift und dass der Hilfsabschnitt (78) das Klinkenrad (58) über einen am Hilfsabschnitt (78) angeformten Vorsprung (80) vorspannt.

4. Trommelbremse nach Anspruch 3, dadurch gekennzeichnet, dass die Sperrklinke (76) das Klinkenrad (58) vorspannt, wenn die Spannmittel (28) betätigt sind, und dass der Vorsprung (80) das Klinkenrad (58) bei gelösten Spannmitteln (28) in der gleichen Richtung (C) vorspannt, wenn der vorgegebene Wert bei Betätigung der Spannmittel (28) erreicht worden ist.

5. Trommelbremse nach Anspruch 3, dadurch gekennzeichnet, dass der Vorsprung (80) das Klinkenrad (58) nach dem vorgegebenen Ausschlag vorspannt, wenn die Spannmittel (28) betätigt sind, und dass die Sperrklinke (76) das Klinkenrad (58) in der gleichen Richtung (C) vorspannt, wenn die Spannmittel (28) gelöst sind.

## Claims

1. An automatically adjustable drum brake comprising a pair of segments (12, 14) provided with friction elements (24, 26) adapted to be biased into frictional engagement with a rotating drum by actuating means (28) disposed between two first extremities (30, 32) of the segments (12, 14), a fixed anchorage block (34) disposed between the other two extremities (34, 38) of the segments (12, 14), a strut (44) mounted adjacent to the actuating means (28) and in engagement with each of the two segments by each of its extremities, said strut (44) comprising a device to be automatically extended in response to wear of the friction elements and formed by a screw-nut-mechanism (58, 60) controlled by a detent pawl (76) mounted on a pivotal arm (62) biasing a ratchet wheel (58), the strocke of said arm (62) and accordingly of said detent pawl (76) having an amplitude which increases with an increase of the spacing between the brake drum and said segments, characterized in that said pivotal arm (62) comprises an auxiliary portion (78) also biasing the ratchet wheel (58) when the stroke of the pivotal arm (62) reaches a predetermined value for accelerating the approaching movement of the segments of the brake drum.

2. The drum brake of Claim 1, characterized in that the pivotal arm (62) comprises a U portion (72), the detent pawl being formed on one leg (74) of the U and the auxiliary portion (78) being formed on the other leg of the U portion.

3. The drum brake of Claim 2, characterized in that the U portion (72) straddles said ratchet wheel (58) and in that said auxiliary portion (78) biases said ratchet wheel (58) via a projection (80) formed on said auxiliary portion (78).

4. The drum brake of Claim 3, characterized in that said detent pawl (76) biases said ratchet wheel (58) when the actuating means (28) are applied, and in that said projection (80) biases said ratchet wheel (58) in a same direction (C) when the actuating means (28) are released, if said predetermined value has been reached upon application of the actuating means (28).

5. The drum brake of Claim 3, characterized in that said projection (80) biases said ratchet wheel (58) after said predetermined stroke when the actuating means (28) are applied, and in that said detent pawl (76) biases said ratchet wheel (58) in a same direction (C) when the actuating means (28) are released.

FIG_1

7

FIG_2

FIG_3

FIG_4